# EUROPEAN PATENT SPECIFICATION

(11) **EP 4 368 146 B1**
(45) Date of publication and mention of the grant of the patent: **26.08.2026**
(21) Application number: 22837589.5
(22) Date of filing: 30.06.2022
(51) Int. Cl.: A61C 13/08, B23C 3/00, B23C 5/10, B23C 5/18, A61C 3/06, A61C 13/12, A61C 3/02

(54) **DENTAL END MILL AND PROCESSING METHOD**
DENTALE SCHAFTFRÄSER UND VERARBEITUNGSVERFAHREN
FRAISE DENTAIRE ET PROCÉDÉ DE TRAITEMENT

(30) Priority: 08.07.2021 JP 2021113297
(43) Date of publication of application: 15.05.2024
(73) Proprietor: Kuraray Noritake Dental Inc., Kurashiki-shi, Okayama 710-0801 (JP)
(72) Inventor: ITO, Sho, Miyoshi-shi, Aichi 470-0293 (JP); KATO, Makiko, Miyoshi-shi, Aichi 470-0293 (JP)
(74) Representative: D Young & Co LLP
(86) International application number: PCT/JP2022/026229
(87) International publication number: WO 2023/282173

(56) References cited:
- EP-A1- 3 653 169
- WO-A1-2020/250499
- JP-A- 2017 119 333
- JP-A- 2019 217 118
- JP-A- 2019 502 446
- US-A1- 2019 365 502
- US-A1- 2021 031 282

## Description

The present disclosure relates to a dental end mill and a processing method performed by a dental processing machine including the dental end mill.

### BACKGROUND ART

In the field of dentistry, as a treatment for tooth substance lost due to caries or the like, it is common to manufacture a dental prosthesis as a substitute for the lost tooth material and attach the dental prosthesis to an affected part to restore the function. Types of dental prostheses include a crown, inlay, onlay, or the like for one tooth, and a bridge, a coupling crown, or the like for a plurality of teeth.

Conventionally, the above dental prostheses have been manually manufactured by dental professionals. However, a manufacturing method using, as a manufacturing device, a dental CNC multiaxial processing machine (hereinafter, it is referred to as a "dental processing machine"), which is capable of automation and mass production regardless of day and night as a manufacturing device, has become widespread in recent years.

In a method for manufacturing a dental prosthesis using a dental processing machine, a disk-shaped or block-shaped to-be-cut material (workpiece) is fixed to the dental processing machine; a tool is attached to a spindle which rotates at high speed; and the tool is operated based on a processing program created in advance by dental CAM software or the like to process the to-be-cut material. Various materials are used as the to-be-cut material, and in particular, a hybrid resin, semi-sintered zirconia, PMMA, PEEK, a titanium alloy, a cobalt chromium alloy, a nickel-chromium alloy, or the like is used.

The tools used in the dental processing machine are classified into two types, which are a grinding tool in which fine abrasive grains such as diamond particles are bound with soft metal or the like, and a cutting tool having a spiral blade and a groove. In particular, the cutting tools are generally referred to as end mills.

The processing method of the dental processing machine is roughly classified into a wet type in which the processing is performed while injecting water and a dry type in which the processing is performed while injecting compressed air. However, the grinding tool can be used substantially only in the wet type since frictional heat during the processing is large and clogging easily occurs. On the other hand, the end mill is used widely as a tool for a dental processing machine since it is applicable to a wide range of to-be-cut materials because of its lower frictional heat than the grinding tool and its dual use in the wet and dry types.

On the other hand, the dental prostheses have complicated and diverse shapes in which the shape, size, and tooth crown length are different for each patient, for each region, and for each case. Also, it is necessary to appropriately maintain the positional relationship with the tooth adjacent to the region where the dental prosthesis is attached and the occlusal state with the mating tooth. In addition, it is necessary to reproduce the anatomical form before it is lost. Accordingly, stable high processing quality is required.

As a technique for suppressing tool wear of the end mill, a technique for coating a surface layer of a neck lower portion of a base material with diamond fine particles or the like, and a technique of using diamond for a blade edge are known (see, for example, Patent Literatures 1 to 3).

Patent Literature 1 discloses a dental end mill in which a surface layer of a neck lower portion is coated with diamond fine particles. However, the hard coating layer is only the surface layer of the neck lower portion, and the coating film of the surface layer of the neck lower portion of the end mill may be worn and peeled early during processing. Therefore, it has been difficult to stably obtain the dental prosthesis with high processing quality.

In addition, in the processing by the dental end mill coated with the diamond fine particles disclosed in Patent Literature 1, the surface of the processed dental prosthesis becomes rough, so that dirt such as plaque easily adheres to the surface of the dental prosthesis after attachment in the oral cavity. For this reason, after the processing by the dental processing machine is completed, manual polishing work is performed by a dentist or a dental technician. However, when the dental prosthesis has a complicated shape, a region where the polishing work is insufficient may be generated since the polishing work is done manually.

On the other hand, Patent Literatures 2 and 3 disclose an end mill in which a blade edge and a tip are formed of polycrystalline diamond. However, these end mills are industrial end mills for processing metal materials, and there is no description of the processing for dental materials, and these end mills are not suitable for processing complicated and diverse dental prostheses. Patent Literature 4 discloses a dental milling tool that is a ball-nose end mill having three helical flutes, each flute being associated with a cutting edge, and each cutting edge having chip breakers along the curved edges of the ball. Patent Literature 5 discloses an end mill with a cutting edge portion made of a porous body. Patent Literature 6 discloses a method for producing ceramic dental prosthesis parts, CAD/CAM machining station, and blank made of final-strength dental ceramic.

### CITATION LIST

### Patent Literature

Patent Literature 1: JP 2019-217118 A
Patent Literature 2: JP 2004-255496 A
Patent Literature 3: JP 2020-032485 A
Patent Literature 4: US 2019/365502 A
Patent Literature 5: US 2021/031282 A1
Patent Literature 6: EP 3653169 A1

### SUMMARY

### Technical Problem

The present disclosure has been made in view of the above circumstances and enables the processing of a surface of a dental prosthesis to be smooth in processing by a dental end mill. In addition, it becomes possible to stably obtain a highly accurate dental prosthesis.

### Solution to Problem

To solve the above problems, the inventors have focused on the material of the neck lower portion (blade) of the dental end mill, and as a result, have found that the above problems can be solved by using polycrystalline diamond for the neck lower portion (blade) of the end mill, and have further progressed the research based on this finding, and completed the present disclosure. The invention is defined by the appended claims.

A dental end mill according to the present disclosure is a dental end mill for processing a workpiece, including a shank portion held by a dental processing machine; a neck lower portion including a blade edge; and a neck portion that is configured to connect the shank portion and the neck lower portion. The neck lower portion is formed of polycrystalline diamond.

In addition, a processing method according to the present disclosure is a processing method for a workpiece performed by a dental processing machine including a dental end mill, the method including processing the workpiece using the dental end mill.

### Advantageous Effects

According to the present disclosure, it is possible to process the surface of the dental prosthesis to be smooth in processing using the dental end mill. In addition, it is possible to stably obtain the highly accurate dental prosthesis.

### BRIEF DESCRIPTION OF DRAWINGS

Fig. 1 is a plan view illustrating a schematic configuration of a dental end mill according to an embodiment of the present disclosure.
Fig. 2 is a schematic view of a processing machine including the dental end mill illustrated in Fig. 1 to explain a processing method according to an embodiment of the present disclosure and is

### DESCRIPTION OF EMBODIMENTS

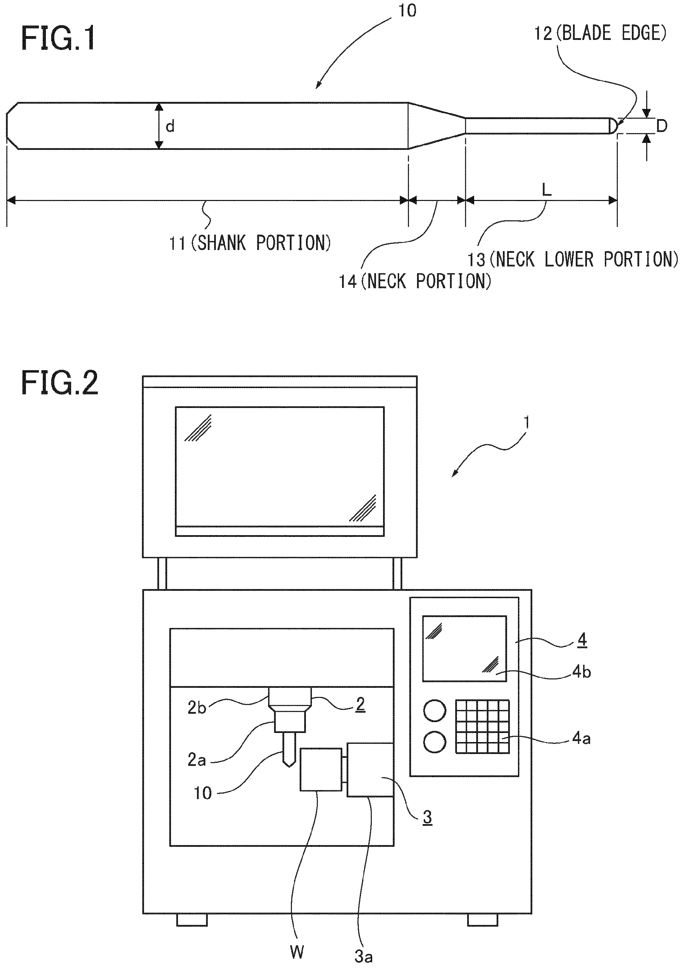

(Structure of dental end mill) Hereinafter, a dental end mill according to an embodiment of the present disclosure will be described with reference to Fig. 1. Fig. 1 is a plan view illustrating a schematic configuration of a dental end mill 10 according to the present embodiment. The dental end mill 10 according to the present embodiment is configured to be attached to a dental processing machine (see, for example, dental processing machine 1 of Fig. 2) and to process a workpiece W to manufacture a dental prosthesis.

As illustrated in Fig. 1, the dental end mill 10 according to the present embodiment includes a shank portion 11, a neck lower portion 13 including a blade edge 12, and a neck portion 14 connecting the shank portion 11 and the neck lower portion 13. The neck lower portion 13 is formed of polycrystalline diamond. In the present embodiment, the neck lower portion 13 of the dental end mill 10 is formed of a single material of polycrystalline diamond. The shank portion 11 is attached to, for example, the dental processing machine 1 (more specifically, to a spindle 2a of the dental processing machine 1) as illustrated in Fig. 2. The polycrystalline diamond that forms the neck lower portion 13 is an aggregate of single-crystal diamond particles. The polycrystalline diamond does not have cleavability peculiar to single-crystal diamond. Therefore, the polycrystalline diamond has excellent wear resistance and is more suitable for a processing tool than single-crystal diamond. The diamond used in the present disclosure may be a natural diamond or artificial diamond as long as it is a polycrystalline diamond. In the case of an artificial diamond, an artificial polycrystalline diamond produced, for example, by a gas phase synthesis method, a high-temperature and high-pressure sintering method, or the like is preferably used as the polycrystalline diamond. In addition, the polycrystalline diamond may be, for example, a sintered diamond in which diamond particles are bonded by a metal bonding material or the like, or a sintered diamond in which diamond particles are directly bonded to each other without a bonding material.

(Average particle diameter of polycrystalline diamond) The average particle diameter of polycrystalline diamond used for the neck lower portion 13 is between 5 nm and 10 µm, preferably 1 µm or less, and more preferably 0.5 µm or less. If the average particle diameter of the polycrystalline diamond is larger than the above upper limit value, the surface of the dental prosthesis becomes rough, and the plaque is likely to adhere, which is not preferable. On the other hand, when the average particle diameter of the polycrystalline diamond is smaller than the above lower limit, cutting efficiency is lowered, which is not preferable. The average particle diameter of the polycrystalline diamond can be measured by, for example, electron microscopy such as SEM and TEM, X-ray diffraction (XRD), or the like.

(Blade diameter of dental end mill) The diameter (blade diameter D, see Fig. 1) of the blade edge 12 of the neck lower portion 13 of the dental end mill 10 is preferably smaller than the diameter (shank diameter d, see Fig. 1) of the shank portion 11. That is, the blade diameter D of the blade edge 12 is preferably between 0.1 mm and 6.0 mm, and more preferably between 0.3 mm and 2.0 mm. If the blade diameter of the blade edge 12 is too large than the above upper limit value, fine processing cannot be performed, which is not preferable. In addition, if the blade diameter of the blade edge 12 is too smaller than the above lower limit value, the processing efficiency is lowered, which is not preferable.

(Blade bottom shape of end mill) The tip shape of the blade edge 12 of the neck lower portion 13, that is, the blade bottom shape of the end mill 10 is selected from a flat end shape, a radius end shape, a ball end shape, or the like. However, a hemispherical ball end shape is preferable since the dental prosthesis is formed of a free-form surface. As a result, it is possible to obtain a dental prosthesis having a smooth surface property.

(Length of neck lower portion) The length L of the neck lower portion 13 is not particularly limited but is preferably between 1.0 mm and 30.0 mm, and more preferably between 1.0 mm and 5.0 mm. It is not preferable that the length of the neck lower portion 13 is longer than the upper limit because rigidity is lowered. It is not preferable that the length of the neck lower portion 13 is shorter than the lower limit because the processing range is limited.

(Shank portion and neck portion) For example, a cemented carbide base material is used as a material for the shank portion 11 and the neck portion 14. Examples of the cemented carbide base material suitably include cermet which is a composite material of ceramics and metal, and cemented carbide such as tungsten carbide (WC)-based cemented carbide, but are not limited to these. In addition, the neck lower portion 13 and the neck portion 14 of the end mill 10 are joined to each other by welding, brazing, or the like, for example. This configuration improves the durability of the end mill 10.

(Material of workpiece) The material of the workpiece W cut by the end mill 10 of the present embodiment is not particularly limited as long as it is a dental material, but dental ceramic and dental resin are suitably exemplified. Using the dental ceramic for the material of the workpiece W makes it possible to obtain a dental prosthesis with high biocompatibility and strength and with low aging deterioration, and thus have excellent aesthetics for a long period of time. In addition, using the dental resin for the material of the workpiece W makes it possible to obtain a lightweight dental prosthesis with good biocompatibility, strength, and aesthetics at a relatively low cost in a short time. In addition, the shape of the workpiece W is not particularly limited and may be any shape such as a block shape or a disk shape.

(Type of dental prosthesis to be processed) The end mill 10 of the present embodiment does not limit the type of dental prosthesis to be processed. The dental prosthesis to be processed may be, for example, an artificial tooth corresponding to any of a central incisor, a lateral incisor, a canine, and a molar, and examples of the dental prosthesis to be processed include a crown (tooth crown), an inlay, an onlay, a bridge, a coupling crown, a tooth crown attached to an abutment of an implant, or the like, but are not limited to them.

(Processing machine including end mill) Fig. 2 is a schematic view of an example of the dental processing machine 1 including the dental end mill 10 according to the present embodiment. As illustrated in Fig. 2, the dental processing machine 1 includes a cutting portion 2, a holding portion 3, a controller 4, or the like. The cutting portion 2 includes a spindle (main axis) 2a that holds the end mill 10, a motor 2b that rotates the spindle 2a, a moving portion that moves the spindle 2a in a predetermined direction(s), or the like. The holding portion 3 includes a holding member 3a that holds the workpiece W, a moving portion that moves the holding member in a predetermined direction(s), or the like. The controller 4 includes an NC device or the like including a processor, a memory, an operation button 4a, a monitor 4b, or the like.

The end mill 10 of the present embodiment is attached to the spindle 2a of the dental processing machine 1, and the workpiece W is attached to the holding member 3a. After that, the processing method of the present embodiment is performed by changing the relative positional relationship between the end mill 10 and the workpiece W in three dimensions and rotating the end mill 10.

That is, the processing method according to the present embodiment is a method for processing the workpiece W performed by the dental processing machine 1 including the dental end mill 10 according to the present embodiment, and the method includes processing the workpiece W using the end mill 10 of the present embodiment. This processing step includes a rough processing and a finish processing by the dental end mill 10. In addition, the processing method according to the present embodiment may include a coloring step, a sintering step, or the like.

As described above, according to the dental end mill 10 and the processing method of the present embodiment, the neck lower portion 13 of the dental end mill 10 is formed of polycrystalline diamond. Accordingly, it is possible to obtain a dental prosthesis having a smooth surface property in a state where the processing of the workpiece W by the dental end mill 10 is completed. In addition, since the processed dental prosthesis has a smooth surface property as described above, the adhesion of the plaque to the surface of the dental prosthesis can be appropriately suppressed after attachment in the oral cavity.

In addition, in the dental end mill 10 of the present embodiment in which the neck lower portion 13 is formed of polycrystalline diamond, even if the processing speed is increased, the accuracy is not reduced, the processing time can be shortened, and a dental prosthesis with higher accuracy and higher definition can be obtained in a short time. In addition, the dental end mill 10 of the present embodiment has excellent durability that can withstand repeated processing. Further, the dental end mill 10 of the present embodiment can suppress wear and peeling of the surface layer. Moreover, the dental end mill 10 of the present embodiment can save the labor of manual polishing work. As a result, the dental end mill 10 and the processing method of the present embodiment can stably obtain the highly accurate dental prosthesis while suppressing deterioration in the processing quality of the dental prosthesis.

In addition, a small tabletop-type processing machine is usually used in the dentistry, and thus the number of end mills that is mounted on the processing machine is limited. On the other hand, in the end mill 10 of the present embodiment, the blade diameter, which is the diameter of the blade edge 12, is smaller than the shank diameter, which is the diameter of the shank portion 11. The blade diameter is between 0.1 mm and 6.0 mm. The neck lower length, which is the length of the neck lower portion 13, is between 1.0 mm and 30.0 mm. With this configuration, more end mills 10 can be mounted on the dental processing machine 1, and accordingly, the small dental processing machine 1 suitable for use in the dentistry can be provided. In addition, with the dental end mill 10 having such a configuration, the dental processing machine 1 can perform fine processing and can process dental prostheses having complicated and diverse shapes with higher accuracy and higher definition with excellent processing efficiency.

In addition, since the dental prosthesis is tailor-made according to the patient, it is necessary to process the dental prosthesis according to various shapes using the same type of end mill 10. For example, in an industrial end mill in which only a blade edge is formed of the diamond as in Patent Literature 2, only the blade edge is used for processing, and thus, portions of a workpiece to be processed and the shape of the workpiece are limited. On the other hand, in the dental end mill 10 of the present embodiment, the entire neck lower portion 13 is formed of polycrystalline diamond. Accordingly, the blade edge and the side surface of the blade edge 12 and the entire side surface of the neck lower portion 13 can be used for processing. As a result, the dental end mill 10 of the present embodiment can more accurately and smoothly process dental prostheses having complicated and diverse shapes having different shapes, sizes, and crown lengths for each patient, region, and case.

Further, in the dental end mill 10 of the present embodiment, by setting the average particle diameter of the polycrystalline diamond to between 5 nm and 10 µm, it is possible to obtain a dental prosthesis having a smooth surface to which a plaque hardly adheres and to perform processing with excellent cutting efficiency.

In addition, in the dental end mill 10 and the processing method of the present embodiment, when the workpiece W is at least one of a dental resin or a dental ceramic, it is possible to obtain a dental prosthesis excellent in biocompatibility, strength, and aesthetics.

### Examples

Hereinafter, the present disclosure will be described more specifically with reference to examples, but the present disclosure is not limited by these examples, and many modifications may be made by those skilled in the art within the technical idea of the present disclosure.

(Example 1) (Processing of workpiece) The implementer attached a processing tool (dental end mill 10) in which a polycrystalline diamond having an average particle diameter of 20 nm is used in the neck lower portion 13 to a processing machine (MEGA-SSS manufactured by ROKU-ROKU SANGYO, LTD) having a resolution of 10 nm or less. Using this processing machine, the implementer cut, as the workpiece W, dental zirconia ("Noritake KATANA (registered trademark) Zirconia" STML, manufactured by Kuraray Noritake Dental Inc.) [diameter 98.5 mm, thickness 18 mm] under the conditions of the tooth crown high-definition processing shown in Table 1 below to obtain a coronal-shaped calcined body of about 15 mm × 15 mm × 15 mm. In Table 1, the rotational speed indicates the main axis rotational speed of the spindle that holds the end mill, the feed speed indicates the moving feed speed of the spindle, the depth of the cut amount indicates the machining or processing depth in the Z direction, and the width of the cut amount indicates the machining or processing width in the XY direction. The Z direction is an axial direction of the main axis, and the XY direction is a direction forming a plane perpendicular to the Z direction. The implementer fired the processed coronal-shaped calcined body at 1550°C for 90 minutes to obtain a final prosthesis.

(Example 2) In Example 2, the implementer used, as the workpiece W, a dental hybrid resin block ("KATANA (registered trademark) AVENCIA (registered trademark) N", manufactured by Kuraray Noritake Dental Inc.). Except for this, the implementer used the same processing machine as in Example 1 to perform processing under the same conditions of the tooth crown high-definition processing as in Example 1, obtaining a final prosthesis.

(Comparative Example 1) In Comparative Example 1, the implementer replaced the dental end mill 10 with a conventional dental end mill in which a diamond fine particle coating is used in the neck lower portion (polycrystalline diamond is not used in the neck lower portion). Except for this, the implementer used the same processing machine as in Example 1 to perform processing and sintering under the same conditions of the tooth crown high-definition processing as in Example 1, obtaining a final prosthesis.

**[Table 1]**

| ROTATIONAL SPEED (SPINDLE SPEED) Min⁻¹ | FEED SPEED (FEED) mm/min | CUT AMOUNT (DEPTH OF CUT) | |
|---|---|---|---|
| | | DEPTH ap mm | WIDTH ae mm |
| 40,000 | 1,000 | 0.005 | 0.005 |

(Measurement of average surface roughness of final prosthesis) The implementer measured the average surface roughness Ra [µm] of the external surface and occlusal surface of the final prosthesis obtained in Examples 1, 2 and Comparative Example 1 with a non-contact laser microscope 3D (manufactured by KEYENCE CORPORATION). The measurement results are shown in Table 2 below.

**[Table 2]**

| | EXAMPLE1 | EXAMPLE2 | COMPARATIVE EXAMPLE 1 |
|---|---|---|---|
| MATERIAL OF END MILL BLADE | POLYCRYSTALLINE DIAMOND | POLYCRYSTALLINE DIAMOND | DIAMOND FINE PARTICLE COATING |
| WORKPIECE | ZIRCONIA | HYBRID RESIN | ZIRCONIA |
| AVERAGE SURFACE ROUGHNESS Ra [µm] OF FINAL PROSTHESIS | 0.3µm | 0.3µm | 32µm |

As shown in Table 2, in Examples 1 and 2 in which the polycrystalline diamond is used in the neck lower portion 13 of the dental end mill 10, the average surface roughness of the final prosthesis is 0.3 µm or less. On the other hand, in Comparative Example 1 using an end mill coated with diamond fine particles, the average surface roughness of the final prosthesis is 30 µm or more. As described above, in Examples 1 and 2, it is possible to reduce the average surface roughness of the final prosthesis as compared with the conventional diamond fine particle coating, indicating that the adhesion of plaque can be suppressed.

With respect to the numerical values and ranges set forth herein, any numerical values or ranges falling within the numerical values and ranges are to be construed as specifically set forth herein even if not so stated.

### INDUSTRIAL APPLICABILITY

The dental end mill of the present disclosure can process the surface of a dental prosthesis to be smooth and stably obtain the highly accurate dental prosthesis in processing by the dental end mill and thus can be used for the processing of a dental prosthesis or the like.

## Claims

1. A dental end mill (10) for processing a workpiece (W), comprising:
a shank portion (11) configured to be held by a dental processing machine (1);
a neck lower portion (13) comprising a blade edge (12); and
a neck portion (14) that is configured to connect the shank portion (11) and the neck lower portion (13),
**characterized in that** the neck lower portion (13) is formed of a single material of polycrystalline diamond,
wherein an average particle diameter of the polycrystalline diamond is between 5 nm and 10 µm, and
wherein the entire neck lower portion (13) is formed of polycrystalline diamond.

2. The dental end mill (10) according to claim 1, wherein
a blade diameter is smaller than a shank diameter and between 0.1 mm and 6.0 mm, wherein the blade diameter is a diameter of the blade edge and the shank diameter is a diameter of the shank portion; and
a neck lower length is between 1.0 mm and 30.0 mm, wherein the neck lower length is a length of the neck lower portion.

3. A processing method for a workpiece performed by a dental processing machine comprising the dental end mill (10) according to claim 1 or 2, the method comprising:
processing the workpiece using the dental end mill (10).

4. The processing method according to claim 3, wherein the workpiece is at least one of a dental resin or a dental ceramic.

## Patentansprüche

1. Dentalfräser (10) zum Bearbeiten eines Werkstücks (W), umfassend:
einen Schaftabschnitt (11), der dazu ausgestaltet ist, von einer Dentalbearbeitungsmaschine (1) gehalten zu werden,
einen unteren Halsabschnitt (13), der eine Schneidenkante (12) umfasst, und
einen Halsabschnitt (14), der zum Verbinden des Schaftabschnitts (11) mit dem unteren Halsabschnitt (13) ausgestaltet ist,
**dadurch gekennzeichnet, dass**
der untere Halsabschnitt (13) aus einem einzigen Material aus polykristallinem Diamant gebildet ist,
wobei ein mittlerer Teilchendurchmesser des polykristallinen Diamanten zwischen 5 nm und 10 µm liegt und
wobei der gesamte untere Halsabschnitt (13) aus polykristallinem Diamant gebildet ist.

2. Dentalfräser (10) nach Anspruch 1, wobei
ein Schneidendurchmesser kleiner als ein Schaftdurchmesser ist und zwischen 0,1 mm und 6,0 mm beträgt, wobei der Schneidendurchmesser ein Durchmesser der Schneidenkante ist und der Schaftdurchmesser ein Durchmesser des Schaftabschnitts ist, und
eine untere Halslänge zwischen 1,0 mm und 30,0 mm beträgt, wobei die untere Halslänge eine Länge des unteren Halsabschnitts ist.

3. Bearbeitungsverfahren für ein Werkstück, das durch eine Dentalbearbeitungsmaschine durchgeführt wird, die den Dentalfräser (10) nach Anspruch 1 oder 2 umfasst, wobei das Verfahren Folgendes umfasst:
Bearbeitung des Werkstücks unter Verwendung des Dentalfräsers (10).

4. Bearbeitungsverfahren nach Anspruch 3, wobei das Werkstück ein Dentalharz und/oder eine Dentalkeramik ist.

## Revendications

1. Fraise dentaire (10) pour traiter une pièce (W), comprenant :
une partie tige (11) configurée pour être retenue par une machine de traitement dentaire (1) ;
une partie col inférieure (13) comprenant un tranchant de lame (12) ; et
une partie col (14) qui est configurée pour relier la partie tige (11) et la partie col inférieure (13),
**caractérisée en ce que**
la partie col inférieure (13) est formée d'un seul matériau de diamant polycristallin,
dans laquelle une diamètre particulaire moyen du diamant polycristallin est entre 5 nm et 10 µm, et
dans laquelle la partie col inférieure entière (13) est formée de diamant polycristallin.

2. Fraise dentaire (10) selon la revendication 1, dans laquelle
un diamètre de lame est plus petit qu'un diamètre de tige et entre 0,1 mm et 6,0 mm, dans laquelle le diamètre de lame est un diamètre du tranchant de lame et le diamètre de tige est un diamètre de la partie tige ; et
une longueur de col inférieure est entre 1,0 mm et 30,0 mm, dans laquelle la longueur de col inférieure est une longueur de la partie col inférieure.

3. Procédé de traitement pour une pièce réalisé par une machine de traitement dentaire comprenant la fraise dentaire (10) selon la revendication 1 ou 2, le procédé comprenant :
le traitement de la pièce en utilisant la fraise dentaire (10).

4. Procédé de traitement selon la revendication 3, dans lequel la pièce est au moins un élément parmi une résine dentaire ou une céramique dentaire.
